# EUROPÄISCHE PATENTSCHRIFT

(11) **EP 3 327 611 B1**
(45) Veröffentlichungstag und Bekanntmachung des Hinweises auf die Patenterteilung: **12.12.2018**
(21) Anmeldenummer: 17197564.2
(22) Anmeldetag: 20.10.2017
(51) Int. Cl.: G06K 7/10, G06K 7/14

(54) **ERFASSUNGSVORRICHTUNG UND VERFAHREN ZUM ERFASSEN EINES OBJEKTS MIT MEHREREN OPTOELEKTRONISCHEN SENSOREN**
DETECTION DEVICE AND METHOD FOR DETECTING AN OBJECT USING A PLURALITY OF OPTOELECTRONIC SENSORS
DISPOSITIF DE DÉTECTION ET PROCÉDÉ DE DÉTECTION D'UN OBJET DOTÉS D'UNE MULTITUDE DE CAPTEURS OPTOÉLECTRONIQUES

(30) Priorität: 24.11.2016 DE 102016122711
(43) Veröffentlichungstag der Anmeldung: 30.05.2018
(73) Patentinhaber: Sick AG, 79183 Waldkirch (DE)
(72) Erfinder: Schöpflin, Uwe, 79297 Winden (DE)

(56) Entgegenhaltungen:
- EP-A1- 2 693 363
- EP-A1- 2 693 364
- US-A1- 2013 020 391

## Beschreibung

Die Erfindung betrifft eine Erfassungsvorrichtung mit mehreren optoelektronischen Sensoren und ein Verfahren zur Erfassung von Objekten nach dem Oberbegriff von Anspruch 1 beziehungsweise 11.

Um ein Objekt mit optoelektronischen Sensoren und insbesondere Kameras von allen Seiten zu erfassen, werden Mehrfachsysteme eingesetzt, die das Objekt aus unterschiedlichen Positionen und Perspektiven erfassen. Wenn der Erfassungsbereich der Kamera nicht ausreicht, um die Seite, für die sie zuständig ist, vollständig zu erfassen, kann dies durch eine Relativbewegung ausgeglichen werden. Meistens wird dazu das Objekt auf einem Förderband an dem Erfassungssystem vorbei geführt. Dann genügt auch eine Kamerazeile, die in einem Winkel zur Förderrichtung steht und die nacheinander erfassten Bildzeilen zu einer Gesamtansicht zusammensetzt.

Ein solches System aus Förderband und mehreren Kameras wird auch als Kameratunnel bezeichnet. Meist wird der Erfassungsbereich durch mechanische Verblendung vom Umgebungslicht geschützt. Solche Kameratunnels können für die Inspektion oder Vermessung von Objekten genutzt werden. Der Anwendung entsprechende Bildverarbeitungsverfahren schließen sich der Erfassung an. Ein wichtiges Einsatzgebiet ist das Lesen von Codes. Dabei lösen kamerabasierte Codeleser zunehmend die früheren Barcodescanner ab. In den Kamerabildern werden Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch automatische Texterkennung (OCR) ist denkbar. Entsprechende Lesetunnel werden beispielsweise beim automatischen Sortieren und Zuordnen von Paketen, der Fluggepäckabfertigung oder in Logistikzentren verwendet.

Um nun in einem Kameratunnel die Objekte von allen Seiten erkennen beziehungsweise im Falle eines Lesetunnels überall Codes lesen zu können, also eine sogenannte omnidirektionale Lesung vorzunehmen, sind beispielsweise sechs Kameras vorgesehen, die das Objekt von oben und unten sowie zu beiden Seiten von schräg vorne und schräg hinten erfassen. Jede Kamera nimmt ein Bild des Objekts auf, sei es in einer Aufnahme oder sukzessive durch Zusammensetzen von Bildzeilen. Die Bilder der seitlichen Kameras umfassen je nach Drehlage des Objekts auch zwei Seiten eines Objekts. Folglich gibt der Kameratunnel sechs Bilder aus, die jeweils eine oder mehrere Seiten des Objekts zeigen. Die Bilder werden dann beispielsweise über ein Netzwerk versandt. Das ist aber relativ aufwändig, weil eine Vielzahl von Bildern für dasselbe Objekt übergeben und ausgewertet werden, deren Information teilweise redundant ist und wo die Zuordnung eines Bildabschnitts zur ursprünglichen Lage auf dem Objekt schwer zugänglich ist.

Aus der EP 2 003 599 A1 ist ein optoelektronischer Sensor zur Erfassung von Codes bekannt, der abschnittsweise Bilder von auf einem Förderer bewegten Objekten einliest. Ein erster Aspekt der EP 2 003 599 A1 ist die Binarisierung der erfassten Grau- oder Farbbilddaten in Echtzeit noch während des Einlesens weiterer Abschnitte. Ein anderer Aspekt befasst sich damit, die Information, wie Rohbilddaten, Codebereiche oder Ergebnisse einer Decodierung, in einer strukturierten Datei zusammenzufassen und auszugeben. Der Umgang mit mehreren Sensoren und deren unterschiedlichen Perspektiven wird auf diese Weise aber nicht erleichtert.

Die EP 2 693 363 A1 offenbart ein Kamerasystem zur Erfassung eines Stromes von Objekten, bei dem mehrere Erfassungseinheiten nebeneinander angeordnet sind. Die Erfassungseinheiten stellen ihre Fokussierung komplementär ein, um auch unterschiedlich hohe Objekte scharf aufzunehmen, die nebeneinander gefördert werden. Bezüglich des Objektstroms oberhalb der Erfassungseinheiten ist ein Geometrieerfassungssensor vorgesehen. Zusätzliche Sensoren aus anderer Perspektive zur Erfassung von Geometrien oder Codes von der Seite oder von unten sind denkbar.

Die EP 2 693 364 A1 beschreibt ein ähnliches Kamerasystem. In diesem Dokument geht es nicht darum, die Fokussierung zu koordinieren, sondern ein Bild eines breiten Objektsstroms zusammenzufügen, wobei innerhalb von interessierenden Bereichen nur Bilddaten der gleichen Erfassungseinheit für das gemeinsame Bild verwendet werden, um Nahten in Codebereichen zu vermeiden.

Aus der US 2013/0020391 A1 ist eine Erkennung und Behandlung von außergewöhnlichen Situationen in einem optischen Codelesesystem bekannt. Das System umfasst ein Objektvermessungssystem und ein optisches Decodiersystem mit Bilderfassungseinheiten aus mehreren Perspektiven.

Es ist daher Aufgabe der Erfindung, mit einer gattungsgemäßen Erfassungseinrichtung verbesserte Bildinformationen bereitzustellen.

Diese Aufgabe wird durch eine Erfassungsvorrichtung mit mehreren optoelektronischen Sensoren und ein Verfahren zur Erfassung von Objekten nach Anspruch 1 beziehungsweise 11 gelöst. In der Erfassungsvorrichtung sind mindestens zwei optoelektronische Sensoren vorgesehen, die einen Erfassungsbereich aus unterschiedlicher Perspektive beobachten. Dadurch können verschiedene Seiten des Objekts aufgenommen werden, wobei dies einen teilweisen Überlapp keineswegs ausschließt. Die Erfindung geht nun von dem Grundgedanken aus, die Bildinformation zu konsolidieren, so dass die Seiten des Objekts in ihrer ursprünglichen Anordnung auf dem Objekt erkennbar bleiben, und zwar bevorzugt ohne Dopplungen. Vorzugsweise wird dazu jeweils eine Ansicht zu jeder relevanten Seite aus den Bildinformationen extrahiert, und diese Ansichten werden dann geeignet in einer Ebene angeordnet, so dass die Nachbarschaftsbeziehungen der Seiten auf dem dreidimensionalen Objekt auch in einem flachen Bild erkennbar bleiben. Dabei bedeutet relevante Seite, dass die Erfassungsvorrichtung nicht zwingend für alle Seiten gedacht ist und beispielsweise den Boden oder eine andere Seite eines Objekts nicht erfassen soll oder kann.

Die Erfindung hat den Vorteil, dass die Erfassungsvorrichtung Bilddaten bereitstellen kann, die sich deutlich einfacher intuitiv und in Bildauswertungsverfahren bewerten lassen. Denn die Ansichten lassen sich einerseits auf die relevanten Abschnitte der Objektseiten beschränken, wobei Redundanz vermieden wird. Außerdem bleibt durch das geeignete Anordnen in einer Ebene die ursprüngliche Objektgeometrie erkennbar, so dass Bildinformationen sofort räumlich zugeordnet werden können.

Die optoelektronischen Sensoren sind vorzugsweise Kameras, die als Matrix-, aber auch als Zeilenkameras ausgebildet sein können, wobei dann Bildzeilen sukzessive erfasst und zu einer Aufnahme des Objekts aus der jeweiligen Perspektive zusammengesetzt werden. Prinzipiell kann auch ein Laserscanner durch Auswertung der Remission Bilddaten liefern. Hybridformen mit unterschiedlichen Arten von optoelektronischen Sensoren zur Bilderfassung sind technisch möglich, aber unüblich. In besonders bevorzugter Weiterbildung handelt es sich um codelesende Sensoren, also kamerabasierte Codeleser oder Barcodescanner. Die Funktionalität zum Decodieren kann aber ebenso zentral, beispielsweise in einer Auswertungseinheit der Erfassungsvorrichtung oder ganz nachgelagert, anstelle von dezentral in den einzelnen Sensoren implementiert sein.

Die Auswertungseinheit ist bevorzugt dafür ausgebildet, die Ansichten in einer Auffaltung anzuordnen. Eine Auffaltung bedeutet, dass man die Ansichten gemeinsam ausschneiden und wieder zu dem dreidimensionalen Objekt zusammenfalten könnte. Geometrisch wird die Auffaltung auch als Netz bezeichnet. Gerade bei automatischen Sortieranwendungen sind die Objekte sehr häufig zumindest grob quaderförmig, so dass bevorzugt eine Auffaltung eines Quaders erzeugt wird. Wenn die Annahme an die Quaderform des Objekts nicht stimmt, resultiert das in Bildfehlern, bedeutet aber keineswegs, dass die Auffaltung nicht weiter ausgewertet werden kann. Das Objekt muss also keineswegs ein exakter Quader sein, Scherungen wie bei einem Parallelepiped oder gewisse Krümmungen der Seiten des Objekts sind durchaus zulässig. Es ist auch denkbar, die Auffaltung an eine bekannte oder erwartete, von einem Quader abweichende Geometrie anzupassen.

Die Erfassungsvorrichtung weist bevorzugt einen Geometrie-Erfassungssensor auf, der für die Erfassung der Geometrie der Objekte anhand von Abstandsdaten und/oder des Remissionsverhaltens der Objekte ausgebildet ist. Das kann beispielsweise ein Laserscanner sein, der entgegen der Förderrichtung den optoelektronischen Sensoren vorgeordnet ist. Mit Hilfe der dann bekannten Geometrie können die Ansichten und die Seiten des Objekts konkretisiert und beispielsweise eine geeignete Auffaltung gewählt werden. Der Geometrie-Erfassungssensor kann auch in einen oder mehrere der optoelektronischen Sensoren integriert sein, beispielsweise durch ein Lichtlaufzeitverfahren (wie PMD, Photomischdetektion) oder eine stereoskopische Auswertung.

Die Sensoren sind bevorzugt für eine Omni-Lesung von allen Seiten angeordnet. Dazu bedarf es nicht nur der richtigen Anordnung, sondern auch Anzahl von Sensoren. Eine beispielhafte Möglichkeit ist die Anordnung von je einem Sensor oben, unten, rechts, links, vorne und hinten. Die vier seitlichen Sensoren können versetzt angeordnet sein, wie einleitend beschrieben, und nehmen dann von schräg vorne beziehungsweise hinten jeweils zwei Seiten des Objekts auf. Der Begriff Omni-Lesung oder omnidirektionale Lesung wird auch leicht verzerrend verwendet, wenn tatsächlich nicht alle Seiten erfasst sind, beispielsweise nicht der Boden. Dazu wäre ein Sichtfenster erforderlich, das nicht immer zur Verfügung steht.

Die Auswertungseinheit ist bevorzugt dafür ausgebildet, eine jeweilige Ansicht aus den Bilddaten auszuschneiden. Die Sensoren nehmen meist einen größeren Ausschnitt auf als nur eine Seite. Die weiteren Bilddaten können Hintergrund oder, etwa im Falle eines schräg auf das Objekt gerichteten Sensors, Teile mindestens einer weiteren Seite des Objekts enthalten. Um von jeder relevanten Seite nur eine Ansicht zu erhalten, wird daher ein entsprechender Bereich ausgeschnitten (Cropping). Ist eine Seite eines Objekts mehrfach erfasst, so kann eine der Aufnahmen ausgewählt oder aus den redundanten Bilddaten eine hochwertigere Ansicht erzeugt werden.

Die Auswertungseinheit ist bevorzugt dafür ausgebildet, die Ansichten aneinander anzupassen, insbesondere durch Drehung und/oder Reskalierung. Durch Drehung können Ansichten in eine vorgegebene Orientierung gebracht werden. Eine Reskalierung sorgt dafür, dass alle Ansichten den gleichen Maßstab haben, beispielsweise eine gleiche Pixelanzahl an gemeinsamen Kanten.

Die Auswertungseinheit ist bevorzugt dafür ausgebildet, die Ansichten in der Anordnung in einer Ebene zu einem Bild zusammenzufassen. So entsteht ein gemeinsames Bild mit jeweils genau einer Ansicht jeder relevanten Seite des Objekts. Folglich muss nur noch ein einziges Bild weitergegeben und/oder ausgewertet werden.

Die Auswertungseinheit ist bevorzugt dafür ausgebildet, Ansichten mit Informationen über deren Anordnung zueinander auszugeben. Damit steht dann zusätzlich zu den Ansichten eine Metainformation zur Verfügung, beispielsweise wo sich eine erwartete Ansicht in einem ausgegebenen gemeinsamen Bild befindet. Umgekehrt können auch die Ansichten einzeln ausgegeben werden, zusammen mit Metainformation, wie sie zueinander in ein gemeinsames Bild gelegt werden müssten.

Die Auswertungseinheit ist bevorzugt dafür ausgebildet, eine strukturierte Beschreibung oder Datei mit Ansichten und Informationen über deren Identität und/oder Anordnung in der Ebene auszugeben. So werden Bilddaten und Zusatz- oder Metainformation ohne relevanten Informationsverlust in einer einzigen Einheit und in einer Weise zusammengefasst, dass sehr einfach wieder darauf zugegriffen werden kann. Die Metainformation kann die Identität der Kamera sein, welche die Quelle einer Ansicht war, die Perspektive der Kamera insbesondere auch nur in Form einer Kategorie wie oben oder rechts vorne, oder eine Positionsangabe, wo eine Ansicht in einer Auffaltung oder einer dreidimensionalen Rekonstruktion des Objekts anzuordnen ist. Nicht abschließende Beispiele für das Format einer strukturierten Datei sind XML (Extensible Markup Language) oder JSON (JavaScript Object Notation).

In bevorzugter Weiterbildung ist ein Lesetunnel zur Erfassung von optischen Codes auf Objekten vorgesehen, der eine erfindungsgemäße Erfassungsvorrichtung sowie eine Fördereinrichtung aufweist, welche Objekte durch den Lesetunnel fördert. Das Objekt bewegt sich in dem Lesetunnel an den Sensoren vorbei und wird in dieser Bewegung aufgenommen. Ein Lesetunnel kann weitere Sensorik umfassen, beispielsweise eine Waage oder eine RFID-Vorrichtung.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung eines Lesetunnels mit einer Erfassungsvorrichtung aus mehreren optoelektronischen Sensoren;
- Fig. 2: eine Darstellung beispielhafter Aufnahmen der Sensoren in ursprünglicher Form;
- Fig. 3: eine Darstellung gemäß Figur 2 nach Ausschneiden jeweils einer Seite des erfassten Objekts;
- Fig. 4: eine Darstellung gemäß Figur 3 nach einer Drehung und Reskalierung, welche die Ansichten in ein zueinander vergleichbares Format bringt; und
- Fig. 5: eine Darstellung gemäß Figur 4 nach Neuanordnung der Ansichten zu einer Auffaltung des ursprünglichen Objekts.

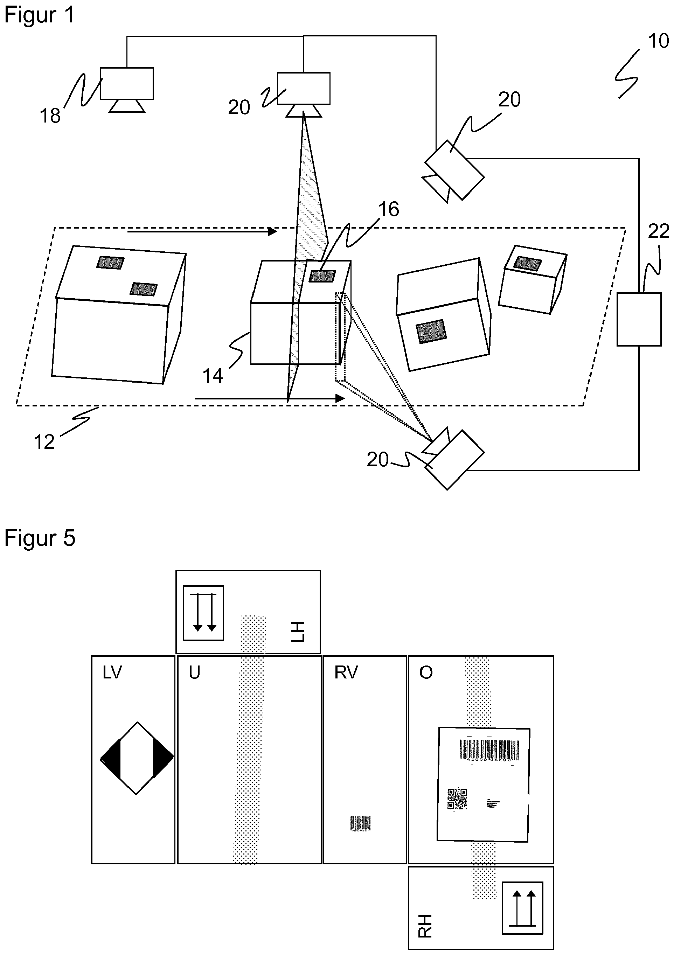

Figur 1 zeigt in einer dreidimensionalen schematischen Darstellung eine Ausführungsform einer erfindungsgemäßen Erfassungsvorrichtung 10, die über einer Fördereinrichtung 12 wie einem Förderband montiert ist, auf dem Objekte 14 in der durch Pfeile angedeuteten Richtung bewegt werden. Die Objekte 14 tragen Codeinformationen 16, beispielsweise Barcodes, zweidimensionale Codes oder Adressbeschriftungen. In einer Ausgestaltung als Lesetunnel ist es Aufgabe der Erfassungsvorrichtung 10, die Codeinformation zu erfassen. Dabei kann sich aber die Aufgabe der Erfassungsvorrichtung 10 darauf beschränken, entsprechende Bilddaten bereitzustellen, die Decodierung kann wahlweise in der Erfassungsvorrichtung 10 oder nachgelagert erfolgen. Es ist auch denkbar, dass die Objekte 14 keine Codeinformationen 16 tragen beziehungsweise sich die Erfassungsvorrichtung 10 nicht für die Codeinformation 16, sondern für die reine Bildinformation der Objekte 14 interessiert.

Ein bezüglich der Förderrichtung vorgeordneter Geometrie-Erfassungssensor 18 nimmt das geometrische Profil der an ihm vorbei bewegten Objekte 14 auf. Der Geometrie-Erfassungssensor 18 kann als Laserscanner ausgebildet sein. In anderen Ausführungsformen ist kein Geometrie-Erfassungssensor 18 vorgesehen.

Die eigentlichen zu erfassenden Bilddaten nehmen Kameras 20 hier in Form von Zeilenkameras mit zeilenförmigen CCD- oder CMOS-Bildsensoren auf, die zu verschiedenen Seiten der Fördereinrichtung 12 montiert sind. Dabei kann mindestens eine dieser Kameras 20 auch die Funktionalität des Geometrie-Erfassungssensors 18 mit übernehmen. Dargestellt in Figur 1 sind drei Kameras 20. Vorzugsweise sind jedoch abweichend von der Darstellung mehr Kameras vorgesehen, um Objekte 14 von mehr oder allen Seiten zu erfassen. Umgekehrt sind auch weniger Kameras prinzipiell vorstellbar.

Mit dem Geometrie-Erfassungssensor 18 und den Kameras 20 ist eine Auswertungseinheit 22 verbunden, die auch Steuerungsfunktionalität übernehmen kann. Die Auswertungseinheit 22 erhält, sofern vorhanden, von dem Geometrie-Erfassungssensor 18 dessen Geometriedaten sowie die Bilddaten der jeweils aufgenommenen Zeile von den Kameras 20. Die zeilenweise ausgelesen Bilddaten werden sukzessive im Verlauf der Bewegung der Objekte 14 auf der Fördereinrichtung 12 zu einem Bild zusammengesetzt. Alternativ werden Matrix-Sensoren anstelle der Zeilenkameras als Kameras 20 eingesetzt, wobei dann das sukzessive Zusammensetzen entfallen kann oder in wesentlich größeren Schritten mit größeren Bildbereichen erfolgt. Um die teilweise an verschiedenen Positionen erfasste Information insbesondere des Geometrie-Erfassungssensors 18 und der Kameras 20 richtig zusammenzufügen, ist vorzugsweise ein Geschwindigkeitssensor vorgesehen, etwa ein Inkrementalgeber, welcher die Fördergeschwindigkeit der Fördereinrichtung 12 bestimmt

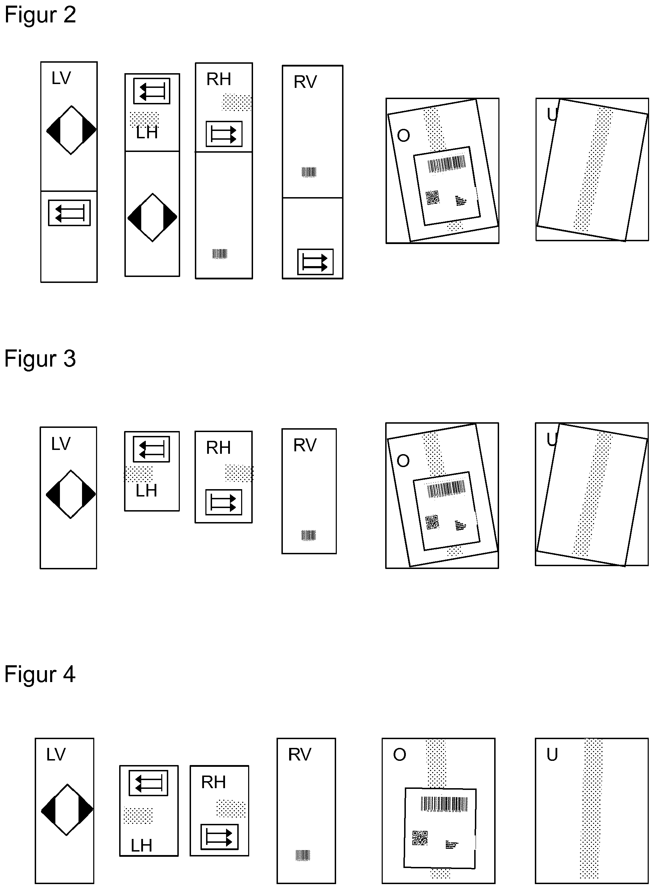

Figur 2 zeigt beispielhafte Bilder, die von einer Erfassungsvorrichtung mit sechs Kameras 20 aufgenommen sind. Die Bilder sind jeweils mit LV für eine Kamera links vorne, LH von links hinten, RH von rechts hinten, RV von rechts vorne, O von oben und U von unten gekennzeichnet. Einzelne Kameras 20 können auch entfallen, beispielsweise die Kamera mit Perspektive von unten. Dadurch, dass die seitlichen Kameras LV, LH, RH, RV eine schräge Perspektive haben, erfassen sie in der Regel zwei Seiten eines Objekts 14, wie auch in Figur 2 erkennbar. Das bedeutet, dass in der weiteren Verarbeitung teilweise redundante Bilddaten verfügbar sind. Diese Redundanz kann aufgelöst werden, indem die doppelten Bilddaten verworfen werden. Alternativ werden die doppelten Bilddaten miteinander verrechnet, oder es werden zumindest die Bilddaten mit der besseren Qualität selektiert.

Herkömmlich werden Bilder wie in Figur 2 dargestellt von der Erfassungsvorrichtung 10 ausgegeben und einzeln verarbeitet. Erfindungsgemäß erfolgt zuvor eine zusammenfassende Verarbeitung insbesondere mit Wahl geeigneter Ausschnitte, Anpassung und Neuanordnung, die nachfolgend beschrieben wird. Die Implementierung dieser Verarbeitung kann praktisch beliebig über die Kameras 20 und die Auswertungseinheit 22 verteilt sein. Auch externe Systeme, wie eine Visionbox oder netzbasierte Recheneinheiten wie ein Server oder eine Cloud können an dieser Verarbeitung beteiligt sein oder sie übernehmen. Es ist denkbar, das Bilddaten zwischendurch gepackt und entpackt werden, um erforderliche Speicher und Bandbreiten der Übertragung zu begrenzen. Auch andere herkömmliche Bildbearbeitung, wie Filter, Helligkeitsanpassung, Binarisierung und dergleichen sind an praktisch allen Stellen der Verarbeitung möglich.

Figur 3 zeigt das Ergebnis einer Verarbeitung, bei der aus den Bildern gemäß Figur 2 Ansichten jeweils einer Seite des aufgenommenen Objekts 14 selektiert werden. Dazu wird der relevante Bildausschnitt gewählt. Dabei sind insbesondere die Doppelaufnahmen der seitlichen Kameras 20 beseitigt. Es bleiben nur noch die notwendigen Ansichten übrig, nämlich eine Ansicht von jeder Seite, und diese Ansichten genügen, um alle Informationen über das Objekt 14 festzuhalten.

Figur 4 zeigt das Ergebnis einer weiteren Verarbeitung, bei der die Ansichten gemäß Figur 3 gedreht und reskaliert werden. Das betrifft in dem Beispiel vornehmlich die Ansichten O, U von oben und unten. Mit diesem Schritt ist sichergestellt, dass die Ansichten eine definierte Orientierung aufweisen und außerdem in ihrer Größe und ihrem Maßstab zueinander passen.

Figur 5 schließlich zeigt das Ergebnis einer Neuanordnung der Ansichten gemäß Figur 4, die bewirkt, dass sich eine logische Zusammengehörigkeit ergibt. Vorzugsweise ist das, wie in Figur 5 gezeigt, eine Auffaltung des Objekts 14. Man erkennt sofort die eindeutige Zuordnung der Ansichten zu den Seiten eines Quaders. Eine nachgelagerte Auswertung könnte den Quader unmittelbar rekonstruieren oder wahlweise eine beliebige Seite darstellen oder deren Bildinformation weiter auswerten. Geometrisch wird die Auffaltung auch als Netz eines Quaders bezeichnet. Ähnliche Anordnungen sind auch für andere Formen als ein Quader denkbar. Außerdem kann auch eine Auffaltung eines Quaders genutzt werden, wenn die tatsächliche Form des Objekts 14 abweicht, etwa gewisse Krümmungen oder Scherungen zeigt. Die entsprechenden Bildfehler sind zumindest bis zu einem gewissen Grad tolerierbar.

Die neu angeordneten Ansichten können als gemeinsames zusammengefügtes Bild ausgegeben werden. Alternativ bleiben die Ansichten separate Bilder, aber es wird mit den Ansichten eine Metainformation ausgegeben, aus denen sich die Anordnung mühelos rekonstruieren lässt, beispielsweise indem die zugehörige Kamera 20 beziehungsweise Perspektive angegeben wird oder indem Koordinaten und eine Drehrichtung zu der jeweiligen Ansicht angegeben werden, welche der Lage und Orientierung der Neuanordnung beispielsweise gemäß Figur 5 entsprechen. Derartige Metainformationen über die einzelnen Ansichten werden vorzugsweise auch mit einem gemeinsamen Bild ausgegeben. In allen diesen Fällen sind über die Bilddaten und die Metainformation die Ansichten den Seiten des Objekts zugeordnet, und es kann eindeutig auf eine Ansicht einer gewünschten Seite zugegriffen beziehungsweise die Ansicht separiert werden.

Das gemeinsame Bild mit den Ansichten oder mehrere Bilder von Ansichten können mit den Metainformationen zusammen in einer strukturierten Beschreibung oder Datei zusammengefasst werden. Beispiele für ein geeignetes Format sind XML oder JSON.

## Patentansprüche

1. Erfassungsvorrichtung (10) mit mehreren optoelektronischen Sensoren (20), die in unterschiedlicher Position und Orientierung angeordnet sind, um jeweils Bildinformationen verschiedener Seiten eines Objekts (14) aufzunehmen, und mit einer Auswertungseinheit (22) zur Verarbeitung der Bildinformationen,
**dadurch gekennzeichnet,**
**dass** die Auswertungseinheit (22) dafür ausgebildet ist, aus den Bildinformationen jeweils eine Ansicht zu jeder erfassten Seite des Objekts (14) als Bildausschnitt zu erzeugen, und die Ansichten so in einer Ebene neu anzuordnen, dass die Nachbarschaftsbeziehungen der Seiten auf dem dreidimensionalen Objekt (14) auch in einem flachen Bild erhalten bleiben und so die ursprüngliche Anordnung entsprechend der ursprünglichen Objektgeometrie wiederherstellbar ist.

2. Erfassungsvorrichtung (10) nach Anspruch 1,
wobei die Auswertungseinheit (22) dafür ausgebildet ist, die Ansichten in einer Auffaltung anzuordnen, insbesondere einer Auffaltung eines Quaders.

3. Erfassungsvorrichtung (10) nach Anspruch 1 oder 2,
die einen Geometrie-Erfassungssensor (18) aufweist, der für die Erfassung der Geometrie der Objekte (14) anhand von Abstandsdaten und/oder des Remissionsverhaltens der Objekte (14) ausgebildet ist.

4. Erfassungsvorrichtung (10) nach einem der vorhergehenden Ansprüche, wobei die Sensoren (20) für eine Omni-Lesung von allen Seiten angeordnet sind.

5. Erfassungsvorrichtung (10) nach einem der vorhergehenden Ansprüche, wobei die Auswertungseinheit (22) dafür ausgebildet ist, eine jeweilige Ansicht aus den Bilddaten auszuschneiden.

6. Erfassungsvorrichtung (10) nach einem der vorhergehenden Ansprüche, wobei die Auswertungseinheit (22) dafür ausgebildet ist, die Ansichten aneinander anzupassen, insbesondere durch Drehung und/oder Reskalierung.

7. Erfassungsvorrichtung (10) nach einem der vorhergehenden Ansprüche, wobei die Auswertungseinheit (22) dafür ausgebildet ist, die Ansichten in der Anordnung in einer Ebene zu einem Bild zusammenzufassen.

8. Erfassungsvorrichtung (10) nach einem der vorhergehenden Ansprüche,
wobei die Auswertungseinheit (22) dafür ausgebildet ist, Ansichten mit Informationen über deren Anordnung zueinander auszugeben.

9. Erfassungsvorrichtung (10) nach einem der vorhergehenden Ansprüche, wobei die Auswertungseinheit (22) dafür ausgebildet ist, eine strukturierte Beschreibung oder Datei mit Ansichten und Informationen über deren Identität und/oder Anordnung in der Ebene auszugeben.

10. Lesetunnel zur Erfassung von optischen Codes (16) auf Objekten (14), mit einer Erfassungsvorrichtung (10) nach einem der vorhergehenden Ansprüche sowie mit einer Fördereinrichtung (12), welche Objekte (14) durch den Lesetunnel fördert.

11. Verfahren zur Erfassung von Objekten (14), bei dem mehrere optoelektronische Erfassungssensoren (20) in unterschiedlicher Position und Orientierung jeweils Bildinformationen verschiedener Seiten eines Objekts (14) aufnehmen und die Bildinformationen ausgewertet werden,
**dadurch gekennzeichnet,**
**dass** aus den Bildinformationen jeweils eine Ansicht zu jeder erfassten Seite des Objekts (14) als Bildausschnitt erzeugt wird und die Ansichten so in einer Ebene neu angeordnet werden, dass die Nachbarschaftsbeziehungen der Seiten auf dem dreidimensionalen Objekt (14) auch in einem flachen Bild erhalten bleiben und so die ursprüngliche Anordnung entsprechend der ursprünglichen Objektgeometrie wiederherstellbar ist.

## Claims

1. A detection apparatus (10) comprising a plurality of optoelectronic sensors (20) that are arranged in different positions and orientations in order to record respective image information of different sides of an object (14) and an evaluation unit (22) to process the image information,
**characterized in that** the evaluation unit (22) is configured to generate a respective view of each detected side of the object (14) as an image section from the image information and to rearrange the views in a plane such that the neighborhood relations of the sides on the three-dimensional object (14) are preserved also in a flat image and so the original arrangement corresponding to the original object geometry can be restored.

2. The detection apparatus (10) in accordance with claim 1,
wherein the evaluation unit (22) is configured to arrange the views in a net, in particular a net of a cuboid,

3. The detection apparatus (10) in accordance with claim 1 or 2,
that has a geometry detection unit (18) that is configured for the detection of the geometry of the objects (14) with reference to distance data and/or a remission behavior of the objects (14).

4. The detection apparatus (10) in accordance with any of the preceding claims,
wherein the sensors (20) are arranged for an omnidirectional reading from all sides.

5. The detection apparatus (10) in accordance with any of the preceding claims,
wherein the evaluation unit (22) is configured to cut out a respective view from the image data.

6. The detection apparatus (10) in accordance with any of the preceding claims,
wherein the evaluation unit (22) is configured to adapt the views to one another, in particular by rotation and/or rescaling.

7. The detection apparatus (10) in accordance with any of the preceding claims,
wherein the evaluation unit (22) is configured to combine the views in the arrangement in a plane to form one image.

8. The detection apparatus (10) in accordance with any of the preceding claims,
wherein the evaluation unit (22) is configured to output views with information on their arrangement with respect to one another.

9. The detection apparatus (10) in accordance with any of the preceding claims,
wherein the evaluation unit (22) is configured to output a structured description or file with views and information on its identity and/or arrangement in the plane.

10. A reading tunnel for detecting optical codes (16) on objects (14) having a detection apparatus (10) according to any of the preceding claims and a conveying device (12) that conveys objects (14) through the reading tunnel.

11. A method of detecting objects (14) in which a plurality of optoelectronic sensors (20) record respective image information of different sides of an object (14) in different positions and orientations and the image information is evaluated
**characterized in that** a respective view of each detected side of the object (14) is generated as an image section from the image information and the views are rearranged in a plane such that neighborhood relations of the sides on the three-dimensional object (14) are preserved also in a flat image and so the original arrangement corresponding to the original object geometry can be restored.

## Revendications

1. Dispositif de détection (10) comportant plusieurs capteurs optoélectroniques (20) qui sont agencés dans différentes positions et orientations, pour enregistrer chacun des informations d'image de différents côtés d'un objet (14), et comportant une unité d'évaluation (22) pour traiter les informations d'image,
**caractérisé en ce que**
l'unité d'évaluation (22) est réalisée pour engendrer à partir des informations d'image une vue respective de chaque côté détecté de l'objet (14) à titre de fragment d'image, et pour ainsi nouvellement agencer les vues dans un plan de telle sorte que les rapports de voisinage des côtés sur l'objet tridimensionnel (14) restent maintenus également dans une image plane et que l'agencement initial est ainsi reproductible en correspondance de la géométrie d'objet initiale.

2. Dispositif de détection (10) selon la revendication 1,
dans lequel l'unité d'évaluation (22) est réalisée pour agencer les vues dans un patron, en particulier dans un patron d'un parallélépipède.

3. Dispositif de détection (10) selon la revendication 1 ou 2,
comprenant un capteur de détection de géométrie (18) qui est réalisé pour détecter la géométrie des objets (14) en se basant sur des données de distance et/ou sur le comportement de réémission des objets (14).

4. Dispositif de détection (10) selon l'une des revendications précédentes, dans lequel les capteurs (20) sont agencés pour une omni-lecture de tous les côtés.

5. Dispositif de détection (10) selon l'une des revendications précédentes, dans lequel l'unité d'évaluation (22) est réalisée pour découper une vue respective à partir des données d'image.

6. Dispositif de détection (10) selon l'une des revendications précédentes, dans lequel l'unité d'évaluation (22) est réalisée pour adapter les vues les unes aux autres, en particulier par rotation et/ou par remise à l'échelle.

7. Dispositif de détection (10) selon l'une des revendications précédentes, dans lequel l'unité d'évaluation (22) est réalisée pour regrouper en une image les vues dans l'agencement dans un plan.

8. Dispositif de détection (10) selon l'une des revendications précédentes, dans lequel l'unité d'évaluation (22) est réalisée pour émettre les vues avec des informations relatives à leur agencement.

9. Dispositif de détection (10) selon l'une des revendications précédentes, dans lequel l'unité d'évaluation (22) est réalisée pour émettre une description structurée ou un fichier structuré avec des vues et des informations relatives à leur identité et/ou à leur agencement dans le plan.

10. Tunnel de lecture pour détecter des codes optiques (16) sur des objets (14), comportant un dispositif de détection (10) selon l'une des revendications précédentes ainsi qu'un dispositif de convoyage (12) qui convoie des objets (14) à travers le tunnel de lecture.

11. Procédé de détection d'objets (14), dans lequel plusieurs capteurs optoélectroniques (20) dans différentes positions et orientations enregistrent chacun des informations d'image de différents côtés d'un objet (14), et les informations d'image sont évaluées,
**caractérisé en ce que**
à partir des informations d'image, une vue respective de chaque côté détecté de l'objet (14) est engendrée à titre de fragment d'image, et les vues sont nouvellement agencées dans un plan de telle sorte que les rapports de voisinage des côtés sur l'objet tridimensionnel (14) restent maintenus également dans une image plane et que l'agencement initial est ainsi reproductible en correspondance de la géométrie d'objet initiale.
